Europäisches Patentamt

European Patent Office

Office européen des brevets

(19)

(11) Veröffentlichungsnummer: **0 247 408 B1**

# EUROPÄISCHE PATENTSCHRIFT

(12)

(45) Veröffentlichungstag der Patentschrift: **03.07.91**

(21) Anmeldenummer: **87106659.3**

(22) Anmeldetag: **07.05.87**

(51) Int. Cl.⁵: **B07C 5/14**, B65G 37/02

(54) **Plattenaufteil- und -sortieranlage.**

(30) Priorität: **20.05.86 DE 3616954**
**26.05.86 DE 3617678**
**13.06.86 DE 3619945**
**23.06.86 DE 3620988**

(43) Veröffentlichungstag der Anmeldung:
**02.12.87 Patentblatt 87/49**

(45) Bekanntmachung des Hinweises auf die
Patenterteilung:
**03.07.91 Patentblatt 91/27**

(84) Benannte Vertragsstaaten:
**AT BE CH DE ES FR GB GR IT LI LU NL SE**

(56) Entgegenhaltungen:
**DE-B- 2 145 011**
**GB-A- 1 388 718**

(73) Patentinhaber: **Jenkner, Erwin**
**Lindenstrasse 13**
**W-7261 Gechingen-Bergwald(DE)**

(72) Erfinder: **Jenkner, Erwin**
**Lindenstrasse 13**
**W-7261 Gechingen-Bergwald(DE)**

(74) Vertreter: **Grosse, Rainer, Dipl.-Ing. et al**
**Gleiss & Grosse Patentanwaltskanzlei Silber-**
**burgstrasse 187**
**W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Plattenaufteil- und -sortieranlage gemäß dem Oberbegriff des Anspruches 1.

Bei einer bekannten Plattenaufteil- und -sortieranlage dieser Art (DE-OS 27 02 725) ist das Abstreiftablett mit der zugeordneten Abstreifeinrichtung ausschließlich einem höhenverstellbaren Hubtisch zugeordnet, auf den jeweils alle Längsstreifen einer zersägten Plattenvorlage überschoben werden. Die Plattenvorlagen werden vom Hubtisch aus über eine Rollenbahn auf eine quer zu ihrer Längsrichtung horizontal verfahrbare Verteilrollenbahn überführt, die eine Mehrzahl von in Abständen nebeneinander angeordneten Rollenbahnen anfahren kann, an deren Enden Stapeleinrichtungen angeordnet sind.

Bei dieser bekannten Plattenaufteil- und -sortieranlage ist die erzielbare Taktzeit, das heißt, der zeitliche Abstand, mit dem der Buntaufteilsägeanlage aufeinanderfolgend Plattenvorlagen vorgelegt werden können, durch das am langsamsten arbeitende Glied bestimmt. Dies ist bei dieser vorbekannten Anlage die Verteilrollenbahn und die von ihr aus erfolgende Verteilung der auf ihr jeweils befindlichen Zuschnitte unterschiedlichen Formats, von denen jeder Zuschnitt aus einer der Anzahl der Platten der betreffenden Plattenvorlage entsprechenden Anzahl von Einzelzuschnitten besteht, auf die unterschiedlichen Rollenbahnen. Und zwar bestehen die auf die Verteilrollenbahn jeweils in Richtung ihrer Längsrichtungen gemeinsam überführten, oft unterschiedlich breiten Längsstreifen einer zersägten Plattenvorlage oft aus unterschiedlich langen Zuschnitten pro Längsstreifen, welche auf unterschiedliche Rollenbahnen zu überführen sind. Und zwar werden von der Verteilrollenbahn aus diese Zuschnitte ebenfalls in Längsrichtung der Längsstreifen auf die Rollenbahnen überführt. Wenn also ein Längsstreifen Zuschnitte unterschiedlicher Längen aufweist, dann kann dieser Längsstreifen nicht in einem Zuge auf eine Rollenbahn überführt werden, sondern hierzu muß die Verteilrollenbahn unterschiedliche Rollenbahnen zum überführen der unterschiedlich langen Zuschnitte des betreffenden Längsstreifens anfahren. Dies ergibt bereits lange Taktzeiten.

Es ist eine Aufgabe der Erfindung, eine Plattenaufteil-und -sortieranlage der eingangs genannten Art zu schaffen, die die Möglichkeit eröffnet, kürzere Taktzeiten erreichen zu können.

Diese Aufgabe wird erfindungsgemäß durch die in Anspruch 1 angegebene Plattenaufteil- und -sortieranlage gelöst.

Hierdurch ist eine sortierende Verteilung der Längsstreifen zersägter Plattenvorlagen und damit von deren Zuschnitten nach Breite auf die von dem Abstreiftablett anfahrbaren, entlang dem Fahrweg des Abstreiftabletts angeordneten Rollenbahnen rasch und einfach möglich. Dabei können auf die jeweils vom Abstreiftablett angefahrene Rollenbahn ein Längsstreifen oder ggf. auch mehrere Längsstreifen gleicher oder unterschiedlicher Breiten der betreffenden Plattenvorlage überführt werden. Von diesen Rollenbahnen aus kann die weitere Abfuhr dieser Längsstreifen zu Abnahmestationen oder weiterführenden Rollenbahnen, vorzugsweise unter Fortführung der sortierenden Verteilung der Zuschnitte unterschiedlichen Formats, also vorzugsweise unter Fortführung der Sortierung erfolgen.

Die erfindungsgemäße Plattenaufteil- und -sortieranlage schafft die Möglichkeit, mit kürzeren, gegebenenfalls sogar viel kürzeren Taktzeiten als die Anlage nach der DE-OS 27 02 725 arbeiten zu können. Je kürzer die Taktzeiten sind, um so höher ist die Wirtschaftlichkeit einer solchen Anlage und ihr Wirkungsgrad. Auch wird die Kapazität der Buntaufteilsägeanlage entsprechend besser ausgenutzt, die die Plattenvorlagen sowohl in gleich breite als auch in unterschiedlich breite Längs- und Querstreifen zersägen kann, so daß im Extremfall alle Zuschnitte einer zersägten Plattenvorlage unterschiedliches Format haben können. Die Längsstreifen unterschiedlicher Breite einer Plattenvorlage können auf mindestens zwei Rollenbahnen verteilt werden. Es kann dabei vorgesehen sein, daß die Anzahl der vom Abstreiftablett anfahrbaren Rollenbahnen so groß ist, daß immer oder in vielen Fällen alle Längsstreifen unterschiedlicher Breite vom Abstreiftablett aus auf unterschiedliche Rollenbahnen überführt werden können, oder daß auf mindestens eine solche Rollenbahn auch mehrere Längsstreifen unterschiedlicher Breite überführt werden können.

Und zwar läßt sich Verkürzung der Taktzeiten schon dadurch erreichen, daß das Abstreiftablett auf ihm jeweils befindliche, unterschiedlich breite Längsstreifen einer zersägten Plattenvorlage direkt selbst auf mehrere Rollenbahnen verteilen kann, wobei der einzelne Längsstreifen quer zu seiner Längsrichtung auf die betreffende Rollenbahn überführt wird, was wegen der relativ geringen Breite der Längsstreifen nur wenig Zeit beansprucht. Sofort nach der Verteilung der Längsstreifen vom Abstreiftablett aus auf die betreffenden Rollenbahnen kann das Abstreiftablett wieder in seine Ausgangsstellung zurückfahren und die nächste zersägte Plattenvorlage aufnehmen. Es ist für diesen sofortigen Rücklauf des Abstreiftabletts selbstverständlich erforderlich, dafür zu sorgen, daß es und die Abstreifeinrichtung nicht an eventuell noch auf den Rollenbahnen liegende Längsstreifen anstoßen kann, was beispielsweise zweckmäßig durch Anheben oder Hochschwenken des Abstreiftabletts mit Abstreifeinrichtung für den Rücklauf und/oder durch Absenken der diese Längsstreifen tragenden Rollenbahnen oder dergleichen erfolgen kann. Der weitere Transport bzw. die Verteilung der Zuschnitte der auf die Rollenbahnen vom Abstreiftablett aus überführten Längsstreifen kann von den betreffenden Rollenbahnen aus erfolgen, noch während das Abstreiftablett mit dem Verteilen der Längsstreifen und dem Rücklauf zur Ausgangsstation beschäftigt ist. Dies sei an einem Beispiel erläutert. Es sei für dieses Beispiel angenommen, daß insgesamt nur zwei Rollenbahnen durch das Abstreiftablett anfahrbar sind, von denen eine eine Verteilrollenbahn ist, die also quer zu ihrer Längsrichtung verfahrbar ist. Die Zuschnitte unterschiedlichen Formats einer zersägten Plattenvorlage können dann unabhängig davon, wieviele der Zuschnitte unterschiedliches Format aufweisen, auf diese beiden Rollenbahnen zu zwei Gruppen sortiert verteilt werden, wobei jede solche Gruppen auf Zuschnitten desselben oder unterschiedlichen Formats bestehen kann. Es sei ferner für dieses Beispiel angenommen, daß eine Plattenvorlage in vier Längsstreifen zersägt sei, von denen jeder mehrere gleich lange und/oder unterschiedlich lange Zuschnitte aufweisen kann. Es können dann beispielsweise zwei Längsstreifen derselben oder unterschiedlicher Breite dieser Plattenvorlage vom Abstreiftablett aus auf die nicht horizontal verfahrbare Rollenbahn und die beiden anderen, dazu abweichenden, unter sich gleiche oder unterschiedliche Breite aufweisenden Längsstreifen auf die Verteilrollenbahn abgestreift werden, was nur wenig Zeit benötigt, umso mehr es ohne weiteres möglich ist und bevorzugt vorgesehen sein kann, daß das Abstreiftablett in seiner Aufnahmestellung für die Plattenvorlagen sich bereits über einer Rollenbahn befindet und somit mit dem Beginn der Fahrt des Abstreiftabletts zur anderen Rollenbahn die ersten beiden Längsstreifen auf die genannte Rollenbahn abgestreift werden können und hierfür keine gesonderte Zeit benötigt wird, sondern nur sowieso notwendige Fahrzeit des Abstreiftabletts zur nächsten Rollenbahn. Nach Abstreifen der beiden nächsten Längsstreifen auf die andere Rollenbahn kehrt das Abstreiftablett in seine Ausgangsstellung zurück und kann die nächste zersägte Plattenvorlage aufnehmen. Durch jede dieser beiden Rollenbahnen kann sofort nach Ablage der beiden Längsstreifen deren Weitertransport auf dieser Rollenbahn zu mindestens einer Station erfolgen, und die Rollenbahnen stehen dann wieder für die Aufnahme von Längsstreifen der nächsten auf das Abstreiftablett aufgebrachten Plattenvorlage zur Verfügung, deren Zuschnitte unterschiedlichen Formats dann ebenfalls unter Sortierung zu zwei durch die betreffenden Längsstreifen gebildeten Gruppen (beispielsweise bilden jeweils zwei Längsstreifen wiederum eine Gruppe von Zuschnitten) auf die beiden Rollenbahnen verteilt werden können.

In einfachen Fällen kann die Verteileinrichtung einer erfindungsgemäßen Anlage nur zwei vom Abstreiftablett anfahrbare Rollenbahnen aufweisen, denen weitere Rollenbahnen und/oder sonstige Abnahmestationen oder weiterführende Stationen nachgeordnet sein können.

Die mindestens eine Verteilrollenbahn, die quer zu ihrer Längsrichtung horizontal verfahrbar ist, kann unterschiedliche Abnahmestationen oder weiterführende Stationen anfahren. Die weiterführenden Stationen können vorzugsweise Zuführrollenbahnen sein, die die dann von der betreffenden Verteilrollenbahn auf sie sortiert aufgebrachten Zuschnitte Abnahmestationen oder weiterführenden Stationen zuführen.

Es ist auch möglich, daß mindestens eine Rollenbahn, die durch das Abstreiftablett zum überführen von Längsstreifen auf sie anfahrbar ist, eine höhenverstellbare Rollenbahn ist, die also die obere Auflageebene eines Hubtisches bilden kann.

Die Breite der Rollenbahn mindestens eines solchen Hubtisches, vorzugsweise der Rollenbahn mindestens eines ortsfest angeordneten Hubtisches, gegebenenfalls auch mindestens einer Verteilrollenbahn, kann vorzugsweise so groß sein, daß sie auch zersägte Plattenvorlagen der auf dieser Anlage verarbeitbaren Plattenvorlagen maximaler Breite aufnehmen kann. Es kann jedoch auch mindestens ein ortsfester Hubtisch vorgesehen sein, dessen höhenverstellbare Rollenbahn schmaler als diese Maximalbreite der Plattenvorlagen ist. Auch ist es zweckmäßig, vorzusehen, daß mindestens eine Verteilrollenbahn, vorzugsweise alle Verteilrollenbahnen geringere Breite haben, als der maximalen Breite der auf dieser Anlage verarbeitbaren Plattenvorlagen entspricht.

Es kann zweckmäßig vorgesehen sein, daß mindestens eine vom Abstreiftablett anfahrbare, höhenverstellbare Rollenbahn, vorzugsweise alle höhenverstellbaren Rollenbahnen in unterschiedliche Höhenstellungen einstellbar ist bzw. sind, so daß auf ihr bzw. ihnen gestapelt werden kann, und dadurch Stapel unter sich gleicher Zuschnitte gebildet werden können, vorzugsweise komplett zersägte Plattenvorlagen unter gleichzeitiger Vereinzelung ihrer Längsstreifen oder Teilanzahlen der Längsstreifen oder nur einzelne Längsstreifen solcher zersägter Plattenvorlagen gestapelt werden können.

Jedoch können dann die oder jede höhenverstellbare Rollenbahn auch an der Verteilung der Zuschnitte, ohne sie zu stapeln, mitwirken.

In vielen Fällen kann zur baulichen Vereinfachung und auch zur Abkürzung der für die Höhenverstellung der betreffenden Verteilrollenbahn benötigten Zeit auch zweckmäßig vorgesehen sein, daß mindestens eine, vorzugsweise jede höhenverstellbare Verteilrollenbahn nur in zwei unterschiedliche Höhenstellungen bewegbar ist, nämlich in eine der Aufnahme von Längsstreifen dienende obere Höhenstellung und in eine untere, dem Überfahren durch das Abstreiftablett bei dessen Rücklauf dienende Höhenstellung, die vorzugsweise auch der Übergabe der Zuschnitte auf Zuführrollenbahnen dient.

Bei den Platten der Plattenvorlagen kann es sich im allgemeinen um sehr große rechteckige Platten handeln, deren Breiten und Längen gegebenenfalls mehrere Meter betragen können und die aus Holz, Kunststoff, Metall, Schichtstoffen oder dergleichen bestehen können.

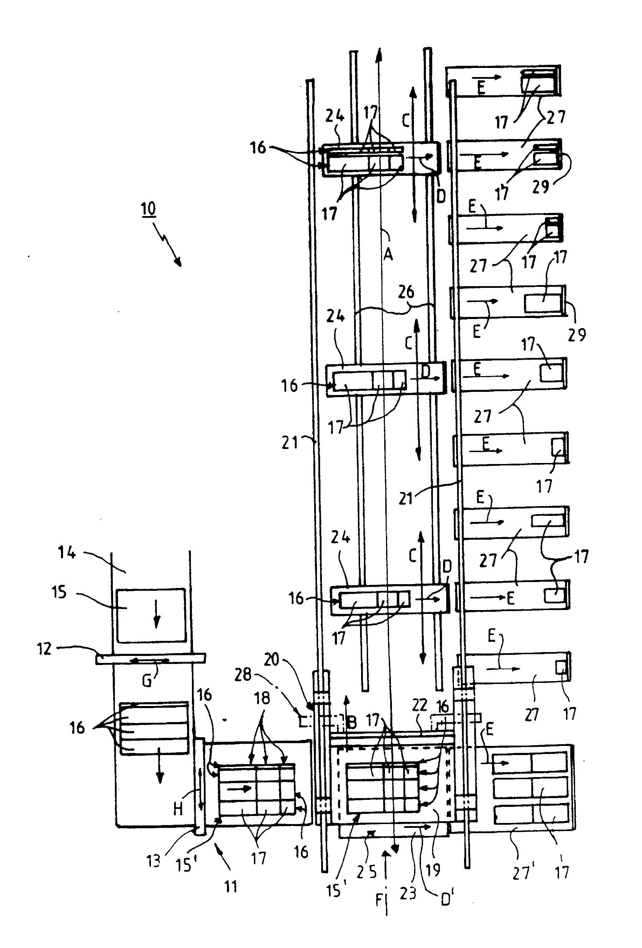

In der Zeichnung ist ein Ausführungsbeispiel einer erfindungsgemäßen Plattenaufteil- und -sortieranlage in schematisierter Form in Draufsicht dargestellt.

Diese Anlage 10 weist eine Buntaufteilsägeanlage 11 mit einer Längssäge 12 und einer Quersäge 13 auf. Die Längssäge 12 zersägt eine ihr auf einer Bahn 14 zugeführte Plattenvorlage 15, das heißt, eine Platte oder ein aus einer Mehrzahl gestapelt aufeinanderliegenden Platten gleichen Formats bestehendes Plattenpaket, durch Schnitte in Pfeilrichtung G, in Längsstreifen 16, und danach wird diese Plattenvorlage 15 zu der Quersäge I3 weitergeleitet, wo sie durch Schnitte in Pfeilrichtung H in Querstreifen 18 und damit in die endgültigen Zuschnitte 17 zersägt wird. Wenn die zersägte Plattenvorlage 15', aus der die Zuschnitte 17 auf diese Weise erhalten sind, aus einer einzigen Platte bestand, dann ist jeder Zuschnitt 17 ein Einzelzuschnitt. Wenn dagegen die betreffende Plattenvorlage 15' aus einer Mehrzahl von übereinanderliegenden Platten, also aus einem Plattenpaket durch Zersägen erhalten wurde, dann besteht jeder Zuschnitt 17 aus einer entsprechenden Mehrzahl von kantengleich übereinanderliegenden Einzelzuschnitten des betreffenden Formats. In diesem Ausführungsbeispiel besteht die dargestellte Plattenvorlage 15' aus vier unterschiedlich breiten Längsstreifen 16 und drei unterschiedlich breiten Querstreifen 18, die zusammen zwölf Zuschnitte 17 unterschiedlichen Formats bilden. Jeder Zuschnitt 17 kann aus einem oder mehreren kantengleich übereinanderliegenden Einzelzuschnitten bestehen. Es sind natürlich auch beliebig andere Aufteilbilder möglich. Diese zersägte Plattenvorlage 15' wird dann von der Quersäge 13 aus selbsttätig auf ein horizontales Abstreiftablett 19 verschoben, das durch eine Tischplatte, eine Mehrzahl von eine horizontale oder schwenkbare Auflageebene bildenden Trägern, die zweckmäßig in Abstreifrichtung verlaufende, zueinander parallele Schlitze zwischen sich bilden können, ein Gitter oder dergleichen gebildet sein kann.

Dieses Abstreiftablett 19 ist an einem Hängewagen 20 oder einem sonstigen Wagen angeordnet, der obenseitig der Anlage 10 auf ortsfest angeordneten, geraden Schienen 21 in Richtung des Doppelpfeiles A hin und her verfahrbar ist.

Dem Abstreiftablett 19 ist eine ebenfalls am Wagen 20 oder an einem gesonderten Wagen angeordnete Abstreifeinrichtung zugeordnet die eine Abstreifleiste 22 oder dergleichen aufweist, die relativ zum Wagen 20 und Abstreiftablett 19 parallel zur Laufrichtung des Wagens 20 lageverstellbar ist und dem Herunterschieben der Längsstreifen 16 in Richtung quer zu ihren Längsrichtungen vom dabei jeweils in Richtung des Pfeiles B bewegten Abstreiftablett auf nebeneinander angeordnete Rollenbahnen 23,24, dient, von denen die Verteilrollenbahnen 24 in diesem Ausführungsbeispiel nicht höhenverstellbar sind, doch kann in vielen Fällen vorteilhaft auch vorgesehen sein, diese Verteilrollenbahnen 24 höhenverstellbar zu machen. Diese Rollenbahnen 23,24 sind zueinander parallel angeordnet. Die Abstreifleiste 22 ist parallel zur Längsrichtung der Längsstreifen 16 angeordnet.

Zum Abstreifen des jeweiligen Längsstreifens 16 vom Abstreiftablett 19 auf eine unter ihm befindliche Rollenbahn 23,24 bewegt sich die Abstreifleiste 22 nicht in horizontaler Richtung über der betreffenden Rollenbahn 23 bzw. 24, sondern es wird hierzu das Abstreiftablett 19 in Pfeilrichtung B senkrecht zur Längsrichtung der betreffenden Rollenbahn 23,24 bewegt, also unter dem betreffenden, am horizontalen Bewegen durch die Abstreifleiste 22 gehinderten Längsstreifen 16 "weggezogen". Dies kann auf unterschiedliche Weise bewirkt werden. Wenn die Abstreifeinrichtung an einem eigenen Wagen angeordnet ist, der zweckmäßig ebenfalls wie der Wagen 20 auf den Schienen 21 fahrbar sein kann und strichpunktiert bei 28 angedeutet ist, wird dieser die Abstreifleiste 22 tragende Wagen 28 zum Abstreifen eines Längsstreifens 16 angehalten und der Wagen 20 fährt mit dem Abstreiftablett 19 in Pfeilrichtung B zum Abstreifen dieses Längsstreifens 16 weiter. Oder das Abstreiftablett 19 ist am Wagen 20 relativ zu ihm parallel zu dessen Bewegungsbahn A verfahrbar. Dann kann der Wagen 20 zum Abstreifen eines Längsstreifens 16 zusammen mit der dann zweckmäßig an ihm angeordneten, relativ zu ihm und dem Abstreiftablett 19 schrittweise lageverstellbaren Abstreifleiste 22 angehalten und das Abstreiftablett 19 am stillstehenden Wagen 20 in Richtung des Pfeiles B bei stillstehender Abstreifleiste 22 zum Abstreifen des betreffenden Längsstreifens verfahren werden. Auch andere Möglichkeiten bestehen.

Dabei wird stets der jeweilige Längsstreifen 16 im Ganzen senkrecht zu seiner Längsrichtung durch Bewegen des Abstreiftabletts 19 in Richtung des Pfeiles B von der dabei in horizontaler Richtung nicht bewegten, stillstehenden oder bei schräg stehendem Abstreiftablett gegebenenfalls etwas vertikal bewegten Abstreifleiste 22 vom Abstreiftablett 19 auf die betreffende gerade Rollenbahn 23 bzw. 24 heruntergeschoben und liegt dann auf ihr, wie dargestellt, parallel zu ihrer Längsrichtung auf, die auch der Richtung D,D' entspricht, in der die Rollen dieser Rollenbahn 23 bzw. 24 die auf sie abgelegten Längsstreifen 16 in deren Längsrichtungen gemäß den Pfeilen D bzw. D' transportieren können. Wenn dabei zwei oder mehr Längsstreifen 16 auf dieselbe Rollenbahn 23 bzw. 24 nacheinander heruntergeschoben werden, kann in an sich bekannter Weise zweckmäßig vorgesehen sein, daß hierbei diese Längsstreifen auf der betreffenden Rollenbahn vereinzelt werden, indem nach Herunterschieben eines Längsstreifens 16 die Abstreifleiste 22 um einen Schritt verstellt und dann der nächste Längsstreifen durch Bewegen des Abstreiftabletts 19 in zur Bewegungsbahn A des Hängewagens 20 paralleler Richtung gemäß Pfeil B relativ zu der dabei wieder in horizontaler Richtung nicht bewegten Abstreifleiste 22 heruntergeschoben wird, usw., wie es an einem Beispiel für die auf der hintersten Rollenbahn 24 befindlichen beiden Längsstreifen 16 dargestellt ist.

Die Rollenbahn 23 bildet die obere höhenverstellbare Auflageebene eines ortsfest angeordneten Hubtisches 25 und ist parallel zu den drei zueinander parallel im Abstand nebeneinander angeordneten Verteilrollenbahnen 24 angeordnet. Während der Hubtisch 25 ortsfest angeordnet ist, sind die drei Verteilrollenbahnen 24 einzeln auf Schienen 26 in Richtung der Doppelpfeile C verfahrbar, das heißt, senkrecht zu ihren Längsrichtungen und damit parallel zur horizontalen Bewegungsrichtung A des Hängewagens 20.

Sowohl das Aufteilen der jeweiligen Plattenvorlage 15 auf der Buntaufteilsägeanlage 11 als auch die gesamte Überführung bzw. Verteilung der jeweiligen zersägten Plattenvorlage 15' auf eine oder mehrere oder alle Rollenbahnen 23,24 und von ihnen auf eine oder mehrere oder alle dargestellten Zuführrollenbahnen 27,27' kann voll- oder teilautomatisch programmgesteuert ablaufen. Falls erwünscht, können auch manuelle Steuerungen oder Eingriffsmöglichkeiten vorgesehen sein.

Jede Verteilrollenbahn 24 steht zweckmäßig immer dann in vorbestimmter Aufnahmestellung still, wenn auf sie ein oder mehrere Längsstreifen 16 abgelegt werden. Sofort danach kann sie die auf ihnen befindlichen Zuschnitte 17, von denen jeder aus einem Einzelzuschnitt oder einer Mehrzahl übereinander liegenden, gleichformatigen Einzelzuschnitten besteht, in Längsrichtung der durch sie gebildeten Längsstreifen 16, das heißt, senkrecht zu den Richtungen A, B, C, in den Richtungen D nach Format sortiert zu jeweils mehreren der geraden und nebeneinander angeordneten Zuführrollenbahnen transportieren, wozu jede Verteilrollenbahn 24 aufeinanderfolgend mehrere Zuführrollenbahnen 27 durch Querfahren gemäß Pfeilen C gemäß dem jeweiligen Programm anfahren kann und an jeder solchen Zuführrollenbahn 27 kurz anhält, um dabei auf sie in jeweils gemäß dem jeweiligen Programm vorbestimmter Weise einen oder mehrere Zuschnitte 17 zu überführen. In diesem Ausführungsbeispiel fährt so zum Verteilen der auf den Verteilrollenbahnen 24 dargestellten Längsstreifen 16 jede der beiden vorderen Verteilrollenbahnen 24 nacheinander je drei Zuführrollenbahnen 27 zum Überführen jeweils eines Zuschnittes 17 der betreffenden unterschiedlich breiten Längsstreifen 16 an. Die hintere Verteilrollenbahn 24 überführt die unterschiedlich langen Zuschnitte 17 der auf ihr befindlichen beiden Längsstreifen 16 auf die drei hinteren Zuführrollenbahnen 27, und zwar je zwei gleich lange, aber unterschiedlich breite Zuschnitte 17 auf jede dieser drei Zuführrollenbahnen. Jede Zuführrollenbahn 27 kann dann sofort den oder die auf sie überführten Zuschnitte 17 bzw. Zuschnitt 17 in der Aufbringrichtung in Pfeilrichtung E -diese Richtungen E sind zueinander und zu den Richtungen D,D' parallel- zu Abnahmestationen transportieren, und zwar vorzugsweise zu je einem endseitigen Anschlag 29 und von da aus können sie weiter transportiert werden. In diesem Ausführungsbeispiel wurden z. B. die zwölf unterschiedlich großen Zuschnitte 17 einer gesamten Plattenvorlage 15' über die drei Verteilrollenbahnen 24 auf die neun Zuführrollenbahnen 27 wie dargestellt sortiert verteilt, doch sind auch beliebige andere Verteilungen je nach Aufteilbild möglich. Falls es erwünscht ist, daß jeder der zwölf unterschiedlich großen Zuschnitte 17 auf je eine Zuführrollenbahn verteilt werden, dann könnte man hierzu diese Anlage um drei weitere Zuführrollenbahnen 27 erweitern.

Die Bewegungsbahn A des Wagens 20 und damit die des von ihm mitgeführten Abstreiftabletts 19 verläuft senkrecht zu den horizontal angeordneten Rollenbahnen 23,24 und auch senkrecht zu den Rollenbahnen 27,27'.

Man kann die Längsstreifen 16 der jeweiligen zersägten einzelnen Plattenvorlage 15' je nach Aufteilbild selbstverständlich auch nur auf eine oder zwei der Verteilrollenbahn 24 und/oder die Rollenbahn 23 verteilen oder sie nur auf die Rollenbahn 23 ablegen, wie es für die auf der Rollenbahn 27' dargestellte Plattenvorlage der Fall war, usw..

Die Verteilrollenbahnen 24 können verhältnismäßig schmal sein, da sie nicht alle Längsstreifen 16 einer Plattenvorlage 15' aufzunehmen brauchen, sondern jeweils nur eine Teilanzahl der Längsstreifen 16, vorzugsweise nur einen oder zwei Längsstreifen 16, wie es in diesem Ausführungsbeispiel dargestellt ist. Die Breite dieser Rollenbahnen 24 kann also zweckmäßig kleiner als die maximale Breite der auf dieser Anlage 10 verarbeitbaren Plattenvorlagen 15 sein.

Durch Verfahren des Hängewagens 20 können alle Rollenbahnen 23,24 in beliebig programmierbarer Weise einzeln angefahren und auf beliebig wählbare von ihnen die Längsstreifen 16 einer jeden Plattenvorlage 15' verteilt werden. Durch Querverfahren jeder Verteilrollenbahn 24 in Richtung der Pfeile C zu unterschiedlich wählbaren Zuführrollenbahnen 27 können dann die Zuschnitte 17 jedes einzelnen Längsstreifens 16 in beliebig programmierbarer Weise gemäß dem jeweils vorgesehenen Programm auf mehrere unterschiedliche Zuführrollenbahnen 27 überführt und damit nach Längen und Breiten sortiert verteilt werden. Es kann auch vorgesehen sein, daß zumindest einige der zueinander parallelen Zuführrollenbahnen 27 von mindestens zwei Verteilrollenbahnen 24 bei unterschiedlichen Verteilplänen alternativ angefahren werden können. Auch ist es möglich, ganze Längsstreifen 16 auf die Zuführrollenbahnen 27 zu überführen, wenn dies das Aufteilbild zuläßt. In diesem Ausführungsbeispiel ist, wie bereits erwähnt, dargestellt, daß eine Plattenvorlage 15' auf die Rollenbahnen 24 verteilt worden ist, indem zuerst ein Längsstreifen 16 auf die vordere Verteilrollenbahn 24, danach auf die mittlere Verteilrollenbahn 24 ein weiterer Längsstreifen 16 und die letzten zwei Längsstreifen 16 der Plattenvorlage auf die hinterste Verteilrollenbahn 24 abgestreift worden sind. Die beiden letzten Längsstreifen auf der Rollenbahn 24 wurden dabei in an sich bekannter Weise vereinzelt, indem nach Abstreifen des ersten Längsstreifens 16 vom Abstreiftablett die Abstreifleiste 22 um einen Schritt versetzt wurde und danach erst der nächste Längsstreifen 16 auf die Rollenbahn 24 abgestreift wurde.

Sobald die betreffende Verteilrollenbahn 24 mit dem oder den betreffenden Längsstreifen 16 beschickt worden ist, kann sie sofort mit dem Verteilen der auf ihr befindlichen Zuführrollenbahnen 27 beginnen, und zwar während noch der Hängewagen 20 zur jeweils nächsten anzufahrenden Verteilrollenbahn 24 fährt. Diese Zuschnitte können vorzugsweise unterschiedliche Längen aufweisen. Die Zuführrollenbahnen 27 können ebenfalls schmale Rollenbahnen sein und gegebenenfalls auch in wesentlich geringeren Abständen oder gar ohne Abstand nebeneinander angeordnet sein.

Die Rollenbahnen 23 und 24 sind angetriebene Rollenbahnen, die also zum Überführen der Zuschnitte 17 auf die Zuführrollenbahnen 27,27' ein- und ausgeschaltet werden können. Durch das jeweilige Einschalten einer Rollenbahn 23,24 lassen sich ein oder mehrere der auf ihr jeweils befindlichen Zuschnitte 17 in vorbestimmter Weise auf die vorzugsweise etwas höhere Fördergeschwindigkeiten aufweisenden Zuführrollenbahnen 27 bzw. 27' überführen. Der Rollenbahn 23 ist die Zuführrollenbahn 27' zugeordnet, die wesentlich breiter als die Zuführrollenbahn 27 ist. Zum Überführen eines oder mehrerer Zuschnitte 17 auf eine Rollenbahn 27 bzw. 27' wird die betreffende Rollenbahn 24 bzw. 23 für den hierfür erforderlichen Vorschubweg oder die hierfür erforderliche Zeit beispielsweise zeit- oder vorschubwegprogrammiert oder lichtschrankengesteuert oder auf sonstige Weise eingeschaltet und sie hält dann wieder an, sobald der betreffende Zuschnitt 17 bzw. die betreffenden Zuschnitte auf die betreffende Zuführrollenbahn 27 bzw. 27' überführt ist bzw. sind.

Der Verteilung der Längsstreifen 16 und die ihrer Zuschnitte 17 jeder beliebigen Plattenvorlage 15' auf alle Rollenbahnen 27,27' oder einige von ihnen und die Zuführrollenbahnen 23,24 oder einige von ihnen kann also in beliebiger, dem jeweiligen Aufteilbild angepaßter, vorzugsweise programmierbarer Weise vorzugsweise selbsttätig gesteuert erfolgen. Auch können komplette Plattenvorlagen 15' -vorzugsweise unter Vereinzelung ihrer Längsstreifen 16 auf der Rollenbahn 23 und gegebenenfalls auch Stapeln auf dieser Rollenbahn 23- auf die Zuführrollenbahn 27' überführt werden. Und zwar sind in diesem bevorzugten Ausführungsbeispiel die Rollenbahn 23 und 27' etwas breiter als die maximale Breite der durch diese Anlage verarbeitbaren Plattenvorlagen 15, so daß eine auf dem Abstreiftablett 19 befindliche zersägte Plattenvorlage 15' im Ganzen auf die Rollenbahn 23 unter Vereinzelung der Längsstreifen 16 überführt werden kann. Dabei ist es auch möglich, gleich zugeschnittene Plattenvorlagen 15' auf dem Hubtisch 25 zu stapeln und erst dann, wenn die vorgesehene Stapelhöhe erreicht ist, den gesamten Stapel dann auf die entsprechend niedrig stehende Rollenbahn 27' zu überführen, indem man hierzu den Antrieb der Rollenbahn 23 einschaltet.

Der gesamte beschriebene Arbeitsablauf der Anlage 10 kann programmiert selbsttätig ablaufen. Auf der Rollenbahn 27' sind Zuschnitte 17 aus einem früheren Aufteilvorgang dargestellt, die, da gleichformatig, keiner Sortierung bedürfen.

Es ist natürlich auch möglich, auf die Rollenbahn 23 nicht eine komplette zersägte Plattenvorlage aufzubringen, sondern nur einen oder mehrere ihrer Längsstreifen 16 und die restlichen Längsstreifen auf eine oder mehrere der Verteilrollenbahnen 24 zu überführen.

Die Rollen der Rollenbahnen 23,24 können fest mit den sie antreibenden, stationär angeordneten Wellen verbunden sein. Dagegen ist es besonders zweckmäßig, wenn die Rollen der Zuführrollenbahnen 27,27' friktionsangetrieben sind. Dies kann beispielsweise dadurch erfolgen, indem diese Rollen auf angetriebenen Achsen drehbar gelagert, mit diesen Achsen jedoch nicht fest verbunden sind, so daß sie sich relativ zu diesen Achsen drehen können. Wenn nun ein Zuschnitt auf eine solche Zuführrollenbahn bei rotierenden Achsen aufgebracht wird, dann werden die Rollen durch ihn belastet und rotieren infolge der Reibung mit den Achsen und transportieren so den Zuschnitt entlang der Zuführrollenbahn bis zu einem endseitigen Anschlag oder bis dieser Zuschnitt an bereits durch den Anschlag angehaltene andere Zuschnitte anstößt. Dann werden die den Zuschnitt tragenden Rollen durch ihn angehalten, da die Reibung zwischen ihnen und dem Zuschnitt größer als zwischen ihnen und den sie tragenden Achsen ist. Eine solche Rollenbahn sei als Friktionsrollenbahn bezeichnet. Rollenbahnen, in denen die Rollen zwangsmäßig angetrieben sind und nur durch Ein- und Ausschalten des Antriebsmotors in Rotation versetzt und wieder angehalten werden können, seien dagegen als angetriebene Rollenbahnen bezeichnet. Anstatt einer Friktionsrollenbahn ist es auch zu demselben Zweck möglich, die Rollen an einer endlos umlaufenden Gliederkette um ihre Längsachsen frei drehbar anzuordnen. Eine solche Rollenbahn nimmt dann auf sie aufgebrachte Zuschnitte ebenfalls mit sich mit. Wenn jedoch der betreffende Zuschnitt an einen Anschlag oder einen vorangehend angehaltenen Zuschnitt anstößt, dann rollen die Rollen dieser Rollenbahn ständig unter dem Zuschnitt durch, ohne auf ihm zu gleiten, wobei sie ihn jedoch tragen. Diese Rollenbahn ist also technisch äquivalent zur Friktionsrollenbahn. Beide Typen von Rollenbahnen können für die Zuführrollenbahnen 27,27' zweckmäßig vorgesehen sein.

Die dargestellte Anlage kann auch mehr oder weniger als die dargestellten drei Verteilrollenbahnen aufweisen.

In einfachen Fällen kann eine erfindungsgemäße Anlage nur eine einzige Verteilrollenbahn 24 und eine einzige horizontal nicht verfahrbare Rollenbahn 23 aufweisen. Die Verteilrollenbahnen 24 oder mindestens eine Verteilrollenbahn 24 kann dabei in vielen Fällen auch, anstatt unterschiedliche Zuführrollenbahnen anzufahren, andere Abnahme- oder Übergabestationen anfahren, wo die Zuschnitte von ihr abgenommen oder von ihr abgeführt werden.

Die Abnahme der Zuschnitte 17 von den zueinander parallelen Zuführrollenbahnen 27,27', die auf ihnen vorzugsweise jeweils bis zu den endseitigen Anschlägen 29 bewegt werden, kann auf unterschiedliche Weise erfolgen. Beispielsweise könnte die Abnahme der beiden unterschiedlich breiten Zuschnitte 17 von der hintersten Zuführrollenbahn von einer Bedienungsperson von Hand erfolgen, beispielsweise so, daß diese über sie vorzugsweise luftlagernde Bahnen nach rechts und links zu weiterführenden Stationen verteilt werden, beispielsweise zu Stapeleinrichtungen, Zwischenlagern, Paletten oder dergleichen. Auch wenn jeweils nur ein Zuschnitt am Ende einer Zuführrollenbahn 27,27' ankommt, kann dieser ebenfalls von einer Bedienungsperson dann weitergeleitet werden, beispielsweise ebenfalls über eine den Zuschnitt luftlagernde Bahn. Auch andere Abnahmemöglichkeiten bestehen selbstverständlich, insbesondere auch selbsttätige Abnahme beispielsweise durch Greifvorrichtungen, Verschiebevorrichtungen oder dergleichen.

Man kann auch vorsehen, daß das Verschieben der Zuschnitte auf den Zuführbahnen 27 und/oder der Zuführbahn 27' anstatt durch die Rollen durch Schiebevorrichtungen oder dergleichen erfolgt oder daß diese Rollenbahnen schwach schräg geneigt sind, so daß die Zuschnitte auf ihnen von selbst bis zu den endseitigen Anschlägen laufen.

Auch das Verschieben der Zuschnitte auf den Verteilrollenbahnen 24 und der Rollenbahn 23 des Hubtisches 25 kann anstatt durch angetriebene Rollen auch auf andere Weise erfolgen, beispielsweise durch Schiebevorrichtungen.

Die dargestellte Anlage ist in der Lage, die Plattenvorlagen 15 mit viel kürzeren Taktzeiten als die vorbekannte Anlage nach der DE-OS 27 02 725 zu zersägen und Zuschnitte nach Format sortiert auf zu Abnahmestationen führende Zuführrollenbahnen zu verteilen.

Wenn es sich bei der Plattenvorlage 15 um ein Plattenpaket aus n Platten handelt, wo n eine ganze Zahl ist, dann bilden die an den Enden der Zuführrollenbahnen 27 ankommenden Zuschnitte aus dieser Plattenvorlage 15 entsprechend Pakte oder Stapel aus n Einzelzuschnitten.

Bei der dargestellten Anlage kann das Abstreiftablett 19 die Längsstreifen einer auf es aufgeschobenen zersägten Plattenvorlage 15' auf mehrere, im Ausführungsbeispiel auf maximal vier Rollenbahnen 23,24 zu ihrer Sortierung verteilen, wobei die einzelnen Rollenbahnen je nach Erfordernis mit einem oder mehreren Längsstreifen beschickt werden kann, wobei dann die Rollenbahnen, die mit Längsstreifen beschickt sind, dann die weitere Abfuhr dieser Längsstreifen unter weiterer Sortierung nach Zuschnittformaten vornehmen können, während das Abstreiftablett bereits wieder zu seiner Ausgangsstation über dem Hubtisch 25 zurückfährt und die nächste zersägte Plattenvorlage 15' aufnimmt.

Dabei kann sofort nach Beschicken einer Verteilrollenbahn 24 mit einem oder mehreren Längsstreifen sofort mit dem Verteilen der auf ihr befindlichen Zuschnitte auf nachgeordnete Zuführrollenbahnen 27 begonnen werden, während noch das Abstreiftablett 19 zu der nächsten Verteilrollenbahn 24 fährt und dort ein oder mehrere Längsstreifen ablegt. Jede Verteilrollenbahn 24 kann also sofort nach dem Aufbringen eines oder mehrerer Längsstreifen auf sie mit dem Verteilen der hierdurch auf sie aufgebrachten Zuschnitte nach Format auf unterschiedliche Zuführrollenbahnen 27 beginnen und während noch ein oder zwei Rollenbahnen 24 mit dem Verteilen der Zuschnitte einer Plattenvorlage beschäftigt sind, kann bereits wieder die erste Verteilrollenbahn 24 mit einem oder mehreren Längsstreifen der nächsten zersägten Plattenvorlage 15' beschickt werden und mit deren Verteilen beginnen. Es ist also eine außerordentlich flüssige, rasch ablaufende Verteilung von Plattenvorlagen nach beliebigen Aufteilplänen möglich mit sehr kurzen Taktzeiten, und die Anlage kann dann entsprechend mit hohen Wirkungsgraden arbeiten bei besserer Ausnutzung der Buntaufteilsägeanlage 11 als es bisher möglich war, insbesondere auch dann, wenn die Längsstreifen 16 einer Plattenvorlage 15' Zuschnitte 17 unterschiedlicher Längen enthalten, die auf unterschiedliche Zuführrollenbahnen 27 zu verteilen sind, wie es das Ausführungsbeispiel zeigt. Hierzu muß selbstverständlich dafür gesorgt sein, daß das Abstreiftablett 19 und die die Abstreifleiste 22 aufweisende Abstreifeinrichtung auf ihrem Rücklauf nicht an die soeben auf Rollenbahnen 23,24 abgelegten Längsstreifen 16 anstoßen kann. Dies kann auf unterschiedliche Weise erreicht werden. Beispielsweise können die Verteilrollenbahnen 24 wie die Rollenbahnen 23 höhenverstellbar sein und aus den Stellungen, in denen sie die Längsstreifen 16 aufnehmen, in niedrigere Stellungen abgesenkt werden, in denen sie die Zuschnitte 17 auf die Zuführrollenbahnen 27,27' überführen und danach wieder angehoben werden. Oder es kann beispielsweise vorgesehen sein, das Abstreiftablett 19 aus einer horizontalen Stellung, in der es die zersägten Plattenvorlagen 15' aufnimmt, in eine schräg nach unten gerichtete Stellung zu verschwenken, in der die Längsstreifen 16 von ihm durch die Abstreifleiste 22 heruntergeschoben werden können, wozu die Abstreifleiste 22 z. B. so höhenverstellt werden kann, daß sie in konstantem, geringem Abstand oder ohne Abstand von der oder den die Längsstreifen 16 tragenden Auflagefläche oder Auflageflächen des Abstreiftabletts 19 gehalten wird, oder die Abstreifleiste 22 kann beim Abstreifen der Längsstreifen 16 vom schräg gestellten Abstreiftablett 19 in konstanter Höhe verbleiben und mit rechenartig angeordneten Fingern in Längsschlitze des Abstreiftabletts 19 ragen. Die Abstreifeinrichtung und das Abstreiftablett 19 können dann für den Rücklauf des sie tragenden Wagens wieder hochgeschwenkt oder sonstwie hochgehoben werden, so daß sie über auf den Rollenbahnen 24,23 eventuell liegenden Längsstreifen 16 hinweg in ihre Ausgangsstellung zurückgefahren werden können.

Beispielsweise kann die dargestellte Anlage mit drei Verteilrollenbahnen 24 mehrfach schneller als die vorbekannte Anlage der DE-OS 27 02 725 mit nur einer Verteilrollenbahn arbeiten.

Anlagen nach der Erfindung sind also außerordenlich variabel programmierbar, ermöglichen erheblich geringere Taktzeiten als es bisher möglich war und dies gelingt mit verhältnismäßig geringem baulichen Aufwand. Mit erfindungsgemäßen Anlagen lassen sich gewünschte Fertigungskapazitäten kostengünstiger, baulich einfacher und wirtschaftlicher als mit vorbekannten Anlagen gemäß der DE-OS 27 02 725 erreichen. Auch benötigen erfindungsgemäße Anlagen nur relativ wenig Platz, da sie auch besonders kompakte Anordnung gestatten.

In dem dargestellten Ausführungsbeispiel transportieren die Rollen der Rollenbahnen 23 und 24 die auf sie aufgebrachten Längsstreifen in Längsrichtung dieser Längsstreifen weiter. Dies ist besonders vorteilhaft. Es kann jedoch in manchen Fällen auch vorgesehen sein, daß die Rollen mindestens einer der Rollenbahnen so angeordnet sind, daß sie die auf sie aufgebrachten Längsstreifen quer zur Längsrichtung dieser Längsstreifen transportieren können, wobei es sich vorzugsweise um die Rollen der Rollenbahn 23 eines ortsfest angeordneten Hubtisches 24 handeln kann. Die verfahrbaren Verteilrollenbahnen 24 sind in dem dargestellten Ausführungsbeispiel nicht höhenverstellbar. Es ist jedoch auch möglich, mindestens eine dieser Rollenbahnen höhenverstellbar vorzusehen, vorzugsweise um auf ihr gleichformatige Zuschnitte zu stapeln, bevor sie zu nachgeordneten Zuführrollenbahn 27 weitertransportiert werden.

Es ist in nicht dargestellter Weise auch möglich, die Buntaufteilsägeanlage so auszubilden und anzuordnen, daß sie die zersägten Plattenvorlagen nicht in Längsrichtung ihrer Längsstreifen, sondern quer hierzu in durch den strichpunktierten Pfeil F angedeuteter Richtung auf das in Aufnahmestellung befindliche Abstreiftablett 19 überführen kann.

Unter den Längsstreifen 16 einer zersägten Plattenvorlage 15' sind immer diejenigen Streifen verstanden, die jeweils im ganzen auf die Rollenbahnen 23,24 überführt werden, gleichgültig, ob sie länger, gleich lang oder kürzer als die zu ihnen senkrechte, sich ebenfalls parallel zur Ebene der jeweiligen Plattenvorlage 15' erstreckende Dimension der Plattenvorlage 15' ist. Bevorzugt kann jedoch vorgesehen sein, daß, wenn die Maximalgrundfläche von auf der Buntaufteilsägeanlage zu zersägenden Plattenvorlagen nicht quadratisch ist, dann die lange Seite dieser rechteckigen Maximalgrundfläche diejenige Seite ist, die parallel zur die Längsstreifen bildenden Sägerichtung verläuft, da hierdurch das Verteilen der Längsstreifen einer zersägten Plattenvorlage wegen ihrer im Mittel geringeren Anzahl rascher ablaufen und auch mit geringeren Anzahlen von durch das Abstreiftablett anfahrbaren Rollenbahnen 23,24 ausgekommen werden kann. Doch kann in manchen Fällen auch vorgesehen sein, daß sich die kürzere Seite der Maximalgrundfläche von auf erfindungsgemäßen Anlagen verarbeitbaren maximal großen Plattenvorlagen parallel zu den Längsstreifen erstreckt.

**Ansprüche**

1. Plattenaufteil- und -sortieranlage (10), welche eine Längs- und Querschnitte durchführende Sägeaggregate (12,13) aufweisende Buntaufteilsägeanlage (11) aufweist, die eine ihr jeweils vorgelegte, aus einer Platte oder einem Plattenpaket bestehende Plattenvorlage (15) sowohl in gleich breite als auch in unterschiedlich breite Längs- (16) und Querstreifen (18) zersägen kann, um aus ihr hierdurch Zuschnitte (17) auch unterschiedlichen Formats zu erhalten, mit einem quer zur Längsrichtung der Längsstreifen (16) verschiebbaren Abstreiftablett (19), auf das die aus einer Plattenvorlage (15) erhaltenen Zuschnitte (17) aufschiebbar sind, mit einer ein Abstreifelement (22) aufweisenden Abstreifeinrichtung, die dem Abstreiftablett (19) zugeordnet ist und durch die durch Relativbewegung zwischen dem Abstreiftablett (19) und dem Abstreifelement (22) die Längsstreifen (16) der zersägten Plattenvorlage (15) nacheinander quer zur Längsrichtung der Längsstreifen (16) von dem Abstreiftablett (19) auf eine Verteileinrichtung abstreifbar sind, die dem Verteilen der Zuschnitte (17) unterschiedlichen Formats auf mehrere Stationen (27,27') unter Mitwirkung einer quer zu ihrer Längsrichtung horizontal verfahrbaren Verteilrollenbahn (24) dient, **dadurch gekennzeichnet**, daß die Verteileinrichtung mehrere parallel nebeneinander angeordnete Rollenbahnen (23,24) aufweist, von denen mindestens eine Rollenbahn die quer zu ihrer Längsrichtung horizontal verfahrbare Verteilrollenbahn (24) und mindestens eine Rollenbahn eine horizontal nicht verfahrbare Rollenbahn (23) ist, daß das Abstreiftablett (19) an einem Wagen (20) angeordnet ist, der auf einer zum Fahrweg der Verteilrollenbahn (24) parallelen stationären Schienenstrecke (21) verfahrbar ist, welche Schienenstrecke im Abstand oberhalb des Abstreiftabletts (19) und aller Rollenbahnen (23,24) der Verteileinrichtung sich quer zur Längsrichtung dieser Rollenbahnen (23,24) erstreckend angeordnet ist, derart, daß alle Rollenbahnen (23,24) der Verteileinrichtung entlang dem Fahrweg des Abstreiftabletts (19) durch dieses anfahrbar angeordnet sind und die aus einer Plattenvorlage (15) erhaltenen Längsstreifen (16) von dem Abstreiftablett (19) aus unter Vereinzeln direkt auf die Rollenbahnen (23,24) der Verteileinrichtung abstreifbar sind, indem der Wagen (20) und die an demselben Wagen (20) oder einem anderen Wagen (28) angeordnete Abstreifleiste (22) zu jeder der Rollenbahnen (23,24) der Verteileinrichtung fahrbar sind und dort durch Verfahren des Abstreiftabletts (19) relativ zur Abstreifleiste (22) der betreffende Längsstreifen (16) auf die betreffende Rollenbahn (23,24) abstreifbar ist, von der der Weitertransport der Zuschnitte (17) dieses Längsstreifens (16) zu mindestens einer Station (27) sofort nach Ablage dieses Längsstreifens (16) auf der betreffenden Rollenbahn (23,24) der Verteileinrichtung durchführbar ist.

2. Plattenaufteil- und -sortieranlage nach Anspruch 1, **dadurch gekennzeichnet**, daß mindestens eine der Rollenbahnen (23), vorzugsweise eine einzige der Rollenbahnen, zu denen das Abstreiftablett (19) verfahrbar ist, eine höhenverstellbare Rollenbahn (23) eines ortsfest angeordneten Hubtisches (25) ist, dem vorzugsweise eine Zuführrollenbahn (27') nachgeordnet ist.

3. Plattenaufteil- und -sortieranlage nach Anspruch 2, **dadurch gekennzeichnet**, daß die höhenverstellbare Rollenbahn (23) oder mindestens eine höhenverstellbare Rollenbahn zur Aufnahme von kompletten zersägten Plattenvorlagen (15') maximaler Größe ausgebildet ist.

4. Plattenaufteil- und -sortieranlage nach einem der vorhergehenden Ansprüche, **dadurch gekennzeichnet**, daß die mindestens eine quer zu ihrer Längsrichtung verfahrbare Verteilrollenbahn (24), die Zuschnitte (17) von von jeweils vom Abstreiftablett (19) aus auf sie aufgebrachten Längsstreifen (16) zu jeweils mehreren, von ihr durch Verfahren in Querrichtung (C) nacheinander anfahrbaren Stationen, vorzugsweise auf Zuführrollenbahnen (17) zum sortierenden Verteilen überführen kann.

5. Plattenaufteil- und -sortieranlage nach Anspruch 4, **dadurch gekennzeichnet**, daß die von der oder den quer zu ihren Längsrichtungen verfahrbaren Verteilrollenbahnen (24) anfahrbaren Zuführrollenbahnen (27) parallel zueinander angeordnet sind und vorzugsweise die Transportrichtungen (E) der Zuschnitte (17) auf ihnen parallel bzw. gegebenenfalls fluchtend zu ihren Transportrichtungen (D) auf den Rollen der Verteilrollenbahn oder -bahnen (24) sind.

6. Plattenaufteil- und -sortieranlage nach Anspruch 4 oder 5, **dadurch gekennzeichnet,** daß sie mindestens zwei, vorzugsweise zueinander parallele, Verteilrollenbahnen (24) und mindestens die doppelte Anzahl von Zuführrollenbahnen (27,27') aufweist.

7. Plattenaufteil- und -sortieranlage nach einem der vorhergehenden Ansprüche, **dadurch gekennzeichnet,** daß die vom Abstreiftablett (19) anfahrbaren Rollenbahnen (23,24) angetriebene Rollenbahnen sind.

8. Plattenaufteil- und -sortieranlage nach einem der vorhergehenden Ansprüche, **dadurch gekennzeichnet,** daß das Abstreiftablett (19) in zu der Längsrichtung mindestens einer von ihm anfahrbaren Rollenbahn (23,24) vorzugsweise zu der oder den Längsrichtungen der Verteilrollenbahn oder -bahnen oder aller von ihm anfahrbaren Rollenbahnen (23,24) senkrechter Bewegungsbahn zu dieser oder zu diesen Rollenbahnen bewegbar ist.

9. Plattenaufteil- und -sortieranlage nach einem der Ansprüche 4 bis 8, **dadurch gekennzeichnet,** daß die Zuführrollenbahn oder -bahnen (27,27') ortsfest angeordnet ist bzw. sind und/oder daß sie eine Friktionsrollenbahn bzw. -bahnen oder dergleichen ist bzw. sind oder ihr bzw. ihnen Schiebevorrichtungen zum Weitertransport der auf sie aufgebrachten Zuschnitte (17) zu Abnahmestellen, wo die Zuschnitte von ihnen abgenommen werden können, zugeordnet ist bzw. sind.

10. Plattenaufteil- und -sortieranlage nach einem der vorhergehenden Ansprüche, **dadurch gekennzeichnet,** daß die Breite mindestens einer Verteilrollenbahn (24) und/oder mindestens einer Zuführrollenbahn (27), vorzugsweise aller Verteilrollenbahnen (24) und die der ihnen nachgeordneten Zuführrollenbahnen (27), kleiner als die maximale Breite der Plattenvorlagen ist, die auf dieser Anlage verarbeitbar sind.

11. Plattenaufteil- und -sortieranlage nach einem der vorhergehenden Ansprüche, **dadurch gekennzeichnet,** daß sich das Abstreiftablett (19) in seiner der Aufnahme der Plattenvorlagen (15') dienenden Aufnahmestellung über einer Rollenbahn (23), vorzugsweise über einem Hubtisch (25) befindet.

12. Plattenaufteil- und -sortieranlage nach einem der vorhergehenden Ansprüche, **dadurch gekennzeichnet,** daß die Rollen zumindest einer von dem Abstreiftablett (19) anfahrbaren Rollenbahn, vorzugsweise die Rollen aller dieser Rollenbahnen (23,24) oder fast aller dieser Rollenbahnen, für den Transport der auf sie aufgebrachten Längsstreifen (16) in deren Längsrichtungen dienen.

13. Plattenaufteil- und -sortieranlage nach einem der vorhergehenden Ansprüche, **dadurch gekennzeichnet,** daß mindestens eine Verteilrollenbahn (24), vorzugsweise alle Verteilrollenbahnen (24) höhenverstellbar ist bzw. sind und/oder daß die Rollen der Verteilrollenbahn oder Verteilrollenbahnen (24) für den Transport der auf sie aufgebrachten Längsstreifen (16) in deren Längsrichtungen dienen.

14. Plattenaufteil- und -sortieranlage nach Anspruch 13, **dadurch gekennzeichnet,** daß mindestens eine, vorzugsweise jede höhenverstellbare Verteilrollenbahn, nur in zwei unterschiedliche Höhenstellungen bewegbar ist, nämlich in eine der Aufnahme von Längsstreifen dienende obere Höhenstellung und in eine untere, dem Überfahren durch das Abstreiftablett bei dessen Rücklauf dienende Höhenstellung, die vorzugsweise auch der Übergabe der Zuschnitte auf Zuführrollenbahnen dient.

15. Plattenaufteil- und -sortieranlage nach einem der Ansprüche 2-14, **dadurch gekennzeichnet,** daß mindestens eine, vorzugsweise jede der vom Abstreiftablett (19) anfahrbaren, höhenverstellbaren Rollenbahnen in dem Stapeln zersägter Plattenvorlagen (15') bzw. dem Stapeln von Längsstreifen (16) dienende unterschiedliche Höhenstellungen einstellbar ist.

16. Plattenaufteil- und -sortieranlage nach einem der Ansprüche 4 bis 15, **dadurch gekennzeichnet,** daß zumindest einige der Zuführrollenbahnen (27) auch von unterschiedlichen Verteilrollenbahnen (24) zum Überführen von Zuschnitten (17) auf sie anfahrbar sind.

17. Plattenaufteil- und -sortieranlage nach einem der vorhergehenden Ansprüche, **dadurch gekennzeichnet,** daß bei rechteckförmiger Maximalgrundfläche der auf der Buntauteilsägeanlage (11) zersägbaren Platten (15) die Längsstreifen (16) durch Sägeschnitte parallel zur langen Seite dieser Maximalgrundfläche erhalten werden.

18. Plattenaufteil- und -sortieranlage nach einem der vorhergehenden Ansprüche, **dadurch gekennzeichnet,** daß der das Abstreiftablett (19) tragende Wagen (20) auf gerader Bewegungsbahn (A) verfahrbar ist.

19. Plattenaufteil- und -sortieranlage nach einem der vorhergehenden Ansprüche, **dadurch gekennzeichnet**, daß das Abstreiftablett (19) zum Abstreifen von auf ihm befindlichen Längsstreifen (16) auf eine Verteilrollenbahn (24) und/oder eine sonstige Rollenbahn (23) senkrecht zur Längsrichtung der betreffenden Rollenbahn (23,24) bewegt wird, wobei vorzugsweise die Abstreifleiste (22) oder dergleichen der Abstreifeinrichtung dabei in horizontaler Richtung nicht bewegt wird.

20. Plattenaufteil- und -sortieranlage nach einem der vorhergehenden Ansprüche, **dadurch gekennzeichnet**, daß die vom Abstreiftablett (19) anfahrbaren Rollenbahnen (23,24) im Abstand nebeneinander angeordnet sind.

## Claims

1. Panel dividing and sorting plant (10), comprising a panel saw for staggered cuts (11) with cutting units for rip cuts and cross cuts (12,13), being able to cut a book of panels (15) consisting either of one panel or a stack of panels into equally wide or differently wide length strips (16) or cross strips (18), in order to obtain cut to size parts (17) of different sizes, together with slide-off tray (19) movable crosswise to the longitudinal direction of the length strips (16), onto which the cut-to-size parts (17), obtained from the book of panels (15) can be pushed. With a slide-off device with a hold back fence (22) related to the slide-off tray (19) and by means of the relative movement between the slide-off tray (19) and the hold back fence (22) the length strips (16) of the cut book of panels (15) can be slid from the slide-off tray (19) onto a distributor system one after another at right angles to the longitudinal direction of the length strips. This distributor system distributes the cut-to-size parts (17) of different sizes onto several stations (27,27') by means of a crosswise to the longitudinal direction and horizontally moving distributor roller conveyor (24), characterized by the fact that the distributor system consists of several parallel roller tracks (23, 24), at least one of which is a horizontally crosswise to its longitudinal direction movable distributor roller conveyor (24) and at least one of which is a horzontally non-movable roller track (23), the slide-off tray (19) being fixed to a carriage (20) movable on stationary tracks (21) parallel to the distributor roller conveyor (24), these tracks being located in a distance above the slide-off tray (19) and all the roller tracks (23,24) of the distributor sytem crosswise to the longitudinal direction of these roller tracks (23,24), in such a way that all the roller tracks (23,24) of the distributor system along the track of the slide-off tray (19) can be met by the slide-off tray (19) and the length strips (16) cut from the book of panels (15) to be pushed off from the slide-off tray (19) individually directly onto the roller tracks (23, 24) of the distributor system by moving the carriage (20) and the hold back fence (22) mounted to this or a separate carriage (28) to each roller track (23,24) of the distributor system and there by moving the slide-off tray (19) in relation to the hold back fence (22) the length strips being slid onto the roller track (23,24), from where the further transport of the cut-to-size parts (17) of this length strip (16) to at least one station (27) is possible immediately after the length strip (16) has been placed onto the respective roller track (23,24) of the distributor system.

2. Panel dividing and sorting plant according to claim 1, characterized by the fact that at least one roller track (23), preferably just one of the roller tracks, in relation to which the slide-off tray (19) can be moved, is a roller track (23) which is adjustable in height, of a stationary lift (25) preferably with an outfeed roller track (27') at the end.

3. Panel dividing and sorting plant according to claim 2, characterized by the fact that, the roller track adjustable in height (23) or at least one roller track adjustable in height is capable of receiving a full size book of panels (15') being cut.

4. Panel dividing and sorting plant according to one of the before mentioned claims, characterized by the fact that at least one of the distributor roller conveyors (24) movable crosswise to its longitudinal direction can transfer the cut-to-size parts (17) of the length strips (16) that have been loaded onto it by the slide-off tray (19) to several stations by moving crosswise (C) to the stations, preferably to the outfeed roller tracks (27) for sorting and distribution.

5. Panel dividing and sorting plant according to claim 4, characterized by the fact that the outfeed roller tracks (27) which are met by the distributor roller conveyor (24) movable croswise to their longitudinal direction are parallel and the transport direction (E) of the cut-to-size parts (17) which are loaded on them are preferably parallel, i. e. respectively in true alignemnt to their transport direction (D) on the rollers of the distributor roller conveyor or conveyors (24).

6. Panel dividing and sorting plant according to claim 4 and 5, characterized by the fact that it has at least two distributor roller conveyors (24) preferably parallel to each other, and at least twice as many outfeed roller tracks (27, 27').

7. Panel dividing and sorting plant according to the before mentioned claims, characterized by the fact that the roller tracks (23, 24) that can be met by the slide-off tray (19) are driven roller tracks.

8. Panel dividing and sorting plant according to the before mentioned claims, characterized by the fact that the slide-off tray (19) is movable at right angles to the longitudinal direction to at least one of the roller tracks (23,24) that can be met, preferably to the longitudinal direction of the distributor roller conveyor or conveyors or all of the roller tracks (23, 24) that can be met.

9. Panel dividing and sorting plant according to one of the claims 4 to 8 characterized by the fact that the outfeed roller track or tracks (27, 27') is/are stationary and/or that it/they is/are a friction roller track or tracks or that they have pushing devices for the further transport of the cut-to-size parts (17) to the take-off positions where the cuts will be off-loaded from them.

10. Panel dividing and sorting plant according to the before mentioned claims, characterized by the fact that the width of at least one distributor roller conveyor (24) and/or at least one outfeed roller track (27), preferably all the distributor roller conveyors (24) and the outfeed roller tracks (27) behind them, is smaller than the maximum width of the book of panels that will be handled with this plant.

11. Panel dividing and sorting plant according to one of the before mentioned claims, characterized by the fact that the slide-off tray (19) in its receptive position for the reception of the book of panels (15') is standing above a roller track (23) preferably above a lift (25).

12. Panel dividing and sorting plant according to one of the before mentioned claims, characterized by the fact that the rollers of at least one of the roller tracks that are met by the slide-off tray (19), preferably all the rollers of these roller tracks (23, 24) or of nearly all these roller tracks serve for the transport of the length strips (16), loaded on them, in their longitudinal direction.

13. Panel dividing and sorting plant according to one of the before mentioned claims, characterized by the fact that at least one of the distributor roller conveyors (24), preferably all the distributor roller conveyors (24) is/are adjustable in height and/or that the rollers of the distributor roller conveyor or conveyors (24) serve for the transport of the length strips (16) that are loaded on them in teir longitudinal direction.

14. Panel dividng and sorting plant according to claim 13, characterized by the fact that at least one, preferably each of the distributor roller conveyors, adjustable in height, can only be moved to two different height levels, i.e. to the upper position for the reception of the length strips and to the lower position for the overhead return travel of the slide-off tray, which is preferably also the position for the transfer of the cut-to-size parts onto the outfeed roller track.

15. Panel dividing and sorting plant according to claims 2 to 14, characterized by the fact that at least one, preferably each of the roller conveyors adjustable in height, that are met by the slide-off tray (19) are adjustable to different heights serving the stacking of cut-to-size parts (16) or length strips.

16. Panel dividing and sorting plant according to claims 4 to 15, characterized by the fact that at least some of the outfeed roller tracks (27) can be met also by various distributor roller conveyors (24) for the transfer of cut-to-size parts (17).

17. Panel dividing and sorting plant according to one of the before mentioned claims, characterized by the fact that in case of a rectangular maximum surface of the book of panels (15) which can be cut with the panel dividing plant for staggered cuts (11) length strips (16) are obtained by cuts parallel to the longitudinal side of this maximum surface.

18. Panel dividing and sorting plant according to one of the before mentioned claims, characterized by the fact that the carriage (20) carrying the slide-off tray (19) runs on a straight track (A).

19. Panel dividing and sorting plant according to one of the before mentioned claims, characterized by the fact that the slide-off tray (19) for transferring the length strips (16) onto a distributor roller conveyor (24) and/or another roller track (23) is moved vertically to the longitudinal direction of this roller track (23,24), whereby preferably the hold back fence (22) or anything similar to the hold back fence is not moved in horizontal direction during this transfer.

20. Panel dividing and the sorting plant according to one of the before mentioned claims, characterized by the fact that the roller tracks (23, 24) that can be met by the slide-off tray (19) are set up side by side at a certain distance.

**Revendications**

1. Scie a panneaux et installation de triage (10) developpee comme installation de debit pour coupes decalees comportant un groupe de sciage pour executer des coupes longitudinales et transversales, qui est en mesure de couper des panneaux (15), soit individuel ou en paquet de panneaux entier, soit dans des bandes longitudinales (16) et transversales (18) de largeur egale ou aussi de largeur differente pour obtenir des pieces decoupees (l7) aussi de formats differents avec une tablette de raclage (19) mobile en travers dans le sens longitudinal des bandes longitudinales sur lequel les pieces decoupees (17) peuvent etre poussees, avec un element de raclage (22) d'un dispositif de raclage, attribue a la tablette de raclage (22). Grace au mouvement relatif entre la tablette de raclage (19) et l'element de raclage (22) les bandes longitudinales (16) des paquets de panneaux (15) qui sont deja debites, peuvent etre enlevees sucessivement en travers dans le sens longitudinal des bandes longitudinales (16) de la tablette de raclage (19) sur un dispositif de distribution qui doit repartir les pieces decoupees (17) de formats differents sur plusieures stations (27,27') en liaison avec un convoyeur a rouleaux distributeur (24) mobile horizontalment en travers de son sens longitudinal, caracterisee en ce que le dispositif de distribution presente plusieurs convoyeurs a rouleaux parallels (23,24) dont au moins un est un convoyeur a rouleaux distributeur mobile horizontalment en travers dans le sens longitudinal et dont au moins un est un train de rouleaux (23) non mobile horizontalment.
En plus, la tablette de raclage (19) est fixee sur un chariot (20) mobil sur un guidage de rails (21) stationnaire parallel au trajet du convoyeur a rouleaux distributeur (24).
Ce guidage a rails est fixe avec une certaine distance au dessus de la tablette de raclage (19) et de tous les convoyeurs a rouleaux (23,24) du dispositif de distribution, s'etendant en travers dans le sens longitudinal des convoyeurs a rouleaux (23,24) tellement que tous les convoyeurs a rouleaux (23,24) du dispositif de distribution sont arranges le long du trajet de la tablette de raclage (19), accessibles par celle-ci, et que les bandes longitudinales (16) obtenues des paquet de panneaux (15) peuvent etre enlevees de la tablette de raclage (19), en etant separees, directement sur les conveuyeur a rouleaux (23,24) du dispositif de distribution, lorsque le chariot (20) et l'element de raclage (22) fixe a ce meme chariot (20) ou a un autre (28) peuvent approcher tous les convoyeurs a rouleaux (23,24) du dispositif de distribution et, par movemement relativ de la tablette de raclage (19) a l'element de raclage (22), la bande longitudinale respective peut etre posee sur le convoyeur a rouleaux respectif (23,24) duquel le transport des pieces decoupees (17) de cette bande longitudinale (16) sur au moins une station (27) peut etre effectue immediatement apres avoir deposee la bande longitudinale (16) sur le convoyeur a rouleaux respectif (23,24) du dispositif de distribution.

2. Scie a panneaux et installation de triage suivant la revendication 1 caracterisee en ce qu'au moins un des trains de rouleaux (23), de preference un seul des trains a rouleaux contre lesquels la tablette de raclage (19) est mobile, est un train de rouleaux (23), ajustable concernant la hauteur, d'une table elevatrice stationnaire (25) suivie de preference par un train de rouleaux (27').

3. Scie a panneaux et installation de triage suivant la revendication 2, caracterisee en ce que le train de rouleaux (23) ajustable concernant la hauteur ou au moins un convoyeur a rouleaux ajustable concernant la hauteur est capable d'accepter des paquet de panneaux completement debites (15) de grandeur maximale.

4. Soie a panneaux et installation de triage suivant une des revendications precedentes, caracterisee en ce qu'au moins un convoyeur a rouleaux distributeur (24) mobile en travers dans le sens longitudinal peut transporter les pieces decoupees (17) des bandes longitudinales (16) posees sur ceux-ci par la tablette de raclage (19), en mouvant dans le sens transversal (C), sur des stations successives accessibles, de preference sur des trains de rouleaux (27) pour les y assortir et distribuer.

5. Soie a panneaux et installation de triage suivant la revendication 4, caracterisee en ce que les trains de rouleaux (27) accessibles par des convoyeurs a rouleaux distributeur (24) mobiles en travers dans le sens longitudinal, sont arranges parallelement l'un a cote de l'autre, et de preference les sens de transport (E) des pieces decoupees (17) sont parallels, respectivement, le cas echeant, dans l'alignement avec ses sens de transport (D) sur les rouleaux du ou des convoyeurs a rouleaux distributeur (24).

6. Scie a panneaux et installation de triage suivant la revendication 4 ou 5, caracterisee en ce qu'elle presente au moins deux convoyeurs a rouleaux distributeur (24) qui sont de preference parallels et au moins le double nombre de trains de rouleaux (27,27').

7. Scie a panneaux et installation de triage suivant une des revendications precedentes, caracterisee en ce que les convoyeurs a rouleaux (23,24) accessibles par la tablette de raclage (19) sont des convoyeurs a rouleaux actionnes.

8. Scie a panneaux et installation de triage suivant une des revendications precedentes, caracterisee en ce que la tablette de raclage (19) est mobile perpendiculaire a la direction longitudinale d'au moins un covoyeur a rouleaux (23,24) accessible par celle-ci, de preference dans le sens longitudinal du ou des convoyeurs a rouleaux distributeur ou de tous les convoyeurs a rouleaux accessibles par celle-ci.

9. Scie a panneaux et installation de triage suivant une des revendications 4 a 8, caracterisee en ce que le ou les trains de rouleaux (27,27') est/sont arranges fixement et/ou qu'il est / sont des convoyeurs a rouleaux par friction ou de choses pareilles ou qu'il y a des dispositifs de poussee pour le transport des pieces decoupees (17) a des positions ou ces pieces peuvent etre enlevees.

10. Scie a panneaux et installation de triage suivant une des revendications precedentes, caracterisee en ce que la largeur d'au moins un convoyeur a rouleaux (24) et/ou au moins d'un train de rouleaux (27), de preference de tous les convoyeurs de rouleaux distributeur (24) et des trains de rouleaux (27) suivants, est moins grande que la largeur maximale des panneaux qui peuvent etre coupes avec cette installation.

11. Scie a panneaux et installation de triage suivant une des revendications precedentes, caracterisee en ce que la tablette de raclage (19) dans la position de recevoir des paquet de panneaux (15') est situee au dessus d'un train a rouleaux (23) de preference au dessus d'une table elevatrice (25).

12. Scie a panneaux et installation de triage suivant une des revendications precedentes, caracterisee en ce que les rouleaux d'au moins un convoyeur a rouleaux accessible par la tablette de raclage (19), de preference les rouleaux de tous ces convoyeurs a rouleaux (23,24) ou de presque tous ces con-voyeurs a rouleaux sert de transporter les bandes longitudinales (12) dans leur sens longitudinal.

13. Scie a panneaux et installation de triage suivant une des revendications precedentes, caracterisee en ce qu'au moins un convoyeur a rouleaux distributeur (24), de preference tous les convoyeurs a rouleaux distributeur (24) sont ajustables concernant la hauteur et/ou que les rouleaux du/des convoyeurs a rouleaux distributeur (24) servent a transporter les bandes longitudinales (16) dans leur sens longitudinal.

14. Scie a panneaux et installation de triage suivant la revendication 13, caracterisee en ce qu'au moins un, de preference tous les convoyeurs a rouleaux distributeur, ajustables concernant la hauteur, peuvent seulement etre regles dans deux positions differentes, a savoir dans une position superieure qui sert de recevoir des bandes longitudinales et dans une position inferieure pour que la tablette de raclage puisse le surpasser lors de son movement en arriere et ici les pieces decoupees peuvent etre remises sur des trains de rouleaux.

15. Scie a panneaux et installation de triage suivant une des revendications 2 a 14, caracterisee en ce qu'au moins un, de preference tous les convoyeurs a rouleaux, ajustables concernant la hauteur, accessibles par la tablette de raclage (19) sont reglables en ce qui concerne les differentes positions de hauteur pour l'empilage des paquet de panneaux debites (15) ou pour l'empilage des bandes longitudinales (16).

16. Scie a panneaux et installation de triage suivant une des revendications 4 a 15, caracterisee en ce qu'au coins plusieurs des trains de rouleaux (27) sont aussi accessibles par differents convoyeurs a rouleaux distributeur (24) pour le transport des pieces decoupees (17).

17. Scie a panneaux et installation de triage suivant une des revendications precedentes, caracterisee en ce qu'avec une surface rectangulaire maximale de paquet de panneaux a debiter (15) qui peuvent etre coupes avec l'installation de debit pour coupes decalees (11) les bandes longitudinales (16) sont obtenues en coupant parallelement au cote long de cette surface maximale.

18. Scie a panneaux et installation de triage suivant une des revendications, caracterisee en ce que le chariot (20) portant la tablette de raclage (19) est mobile sur un mouvement en ligne droite (A).

19. Scie a panneaux et installation de triage suivant une des revendications precedentes, caracterisee en ce que la tablette de raclage (19) pour poses les bandes longitudinales (16) sur un convoyeur a rouleaux distributeur (24) et/ou un autre train de rouleaux (23) et mobile perpendiculaire au sens longitudinale du convoyeur a rouleaux (23,24), tandis que de preference l'element de raclage (22) ou de choses pareilles du dispositif de raclage n'est pas mobile dans le sens horizontal pendant cette action.

20. Scie a panneaux et installation de triage suivant une des revendications precedentes, caracterisee en ce que les convoyeurs a rouleaux (23,24) accessibles par la tablette de raclage (19) sont arranges l'un a cote de l'autre a une certaine distance.